Europäisches Patentamt

European Patent Office

Office européen des brevets

(19)

(11) EP 0 742 449 A2

(12) EUROPEAN PATENT APPLICATION

(43) Date of publication:
13.11.1996 Bulletin 1996/46

(51) Int Cl.⁶: G01S 13/56, G01S 7/41

(21) Application number: 96303039.0

(22) Date of filing: 30.04.1996

(84) Designated Contracting States:
AT DE ES FR GB IT

(30) Priority: 10.05.1995 GB 9509448

(71) Applicant: PLESSEY SEMICONDUCTORS
LIMITED
Swindon, Wiltshire SN2 2QW (GB)

(72) Inventors:
• Redfern, Stephen William
Eagle, Lincoln, LN6 9DJ (GB)

• Callow, Andrew William
Boston, Lincoln, PE21 9AN (GB)

(74) Representative: Hoste, Colin Francis
The General Electric Company p.l.c.
GEC Patent Department
Waterhouse Lane
Chelmsford, Essex CM1 2QX (GB)

(54) **Doppler microwave sensor**

(57) A Doppler microwave sensor for protecting motor vehicles while minimising the occurrence of false alarms, in which signals from an oscillator/mixer circuit coupled to an antenna are processed in a predetermined manner and the resulting signal or set of signals compared with predetermined signals or sets of signals representing events for which an alarm indication is to be given.

Figure 2

## Description

The invention concerns a Doppler microwave sensor for the detection of movement of a target, and especially, but not exclusively, a Doppler microwave sensor for use in the protection of motor vehicles.

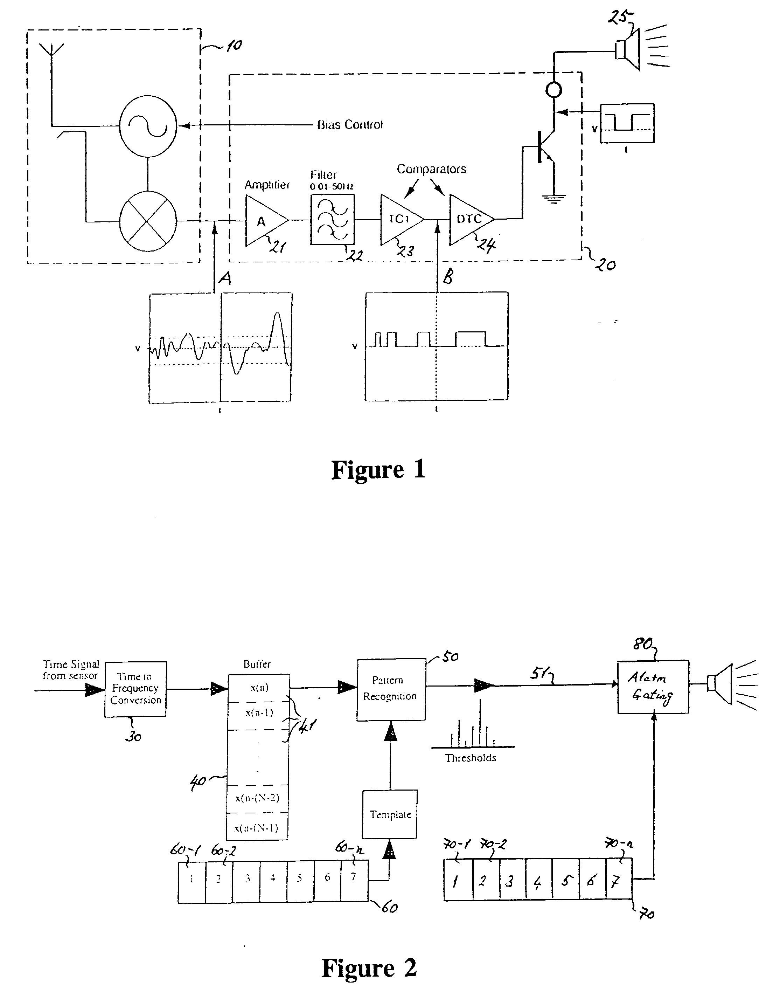

Alarm systems are already known which employ the Doppler technique for detecting the presence of intruders in a building or other defined space. One such is the Doppler-based radar sensor described in British patent application No. 9315892.1 in the name of the present applicant; this application is incorporated herein by way of reference. This sensor, a schematic diagram of which is shown in Figure 1, employs a ceramic-resonator-stabilised, bipolar self-oscillating mixer stage 10 followed by a signal-processing stage 20. The IF signal at the output of the self-oscillating mixer stage 10 (see point A) is first amplified in an amplifier 21, then filtered in, for example, a bandpass filter 22. The filtered signal is then fed to two comparators 23, 24, the first 23 producing an output (see point B) when a given threshold voltage is reached, the second 24 acting as a diode pump using the output of the first comparator as an input. The output of the second comparator 24 is used to trigger an alarm 25, which may be an audible alarm, e.g. a siren, and/or some sort of visual indication.

A typical example of waveforms to be expected at points A and B is shown in Figure 1.

A problem which has been shown to arise in practice with the prior-art systems is the failure to discriminate between targets which represent a genuine alarm situation and those which do not. Thus, a motor manufacturer may decide that a genuine alarm situation only obtains when someone is trying to break into a vehicle, and that it may be desirable to ignore some forms of deliberate tampering with the exterior of the vehicle, for example someone banging on the roof. Another example of a potential alarm situation which in practice poses no threat is the presence and movement within the vehicle of small bodies, e.g. a small animal.

Heretofore, attempts to minimise the occurrence of such false alarms have been centred on reducing the sensitivity of the sensor, on the basis that the condition for maximum detection sensitivity within a vehicle cabin can result in a susceptibility to alarm triggering by the movement of small bodies within the vehicle or by events occurring outside the vehicle. This, however, amounts to an undesirable compromise in performance.

In accordance with a first aspect of the invention, there is provided a Doppler microwave sensor for detecting the movement of a target, comprising an oscillator and mixer stage having an input coupled to an antenna and an output for delivering a signal which contains information concerning the target, and a processing stage fed from said output of the oscillator and mixer stage, the processing stage being arranged to decide whether or not the nature of a target being sensed is such as to warrant the triggering of an alarm indication.

The processing stage may comprise a discrimination means for discriminating between the natures of a number of different targets and an alarm-triggering means connected with the discrimination means for triggering an alarm in dependence on the result of the discrimination carried out by the discrimination means.

The discrimination means may include a time-to-frequency conversion means (e.g. a fast Fourier transform processor) for the conversion of the time-domain information in the incoming signal from the antenna to frequency-domain information. The coefficients resulting from the transform may be taken to a buffer for temporary storage.

The discrimination means may comprise a template-matching means for comparing the frequency-domain output of the mixer and oscillator stage with any one of a plurality of templates representing various potential alarm conditions. The template-matching means may comprise a template store, which may take the form of a ROM, containing a matrix of coefficients for each of the plurality of templates, an output of the template store being taken to an input of a pattern-recognition means, a second input of the pattern-recognition means being fed from an output of the buffer.

The alarm-triggering means may comprise a decision store and an alarm-gating means. The decision store again may take the form of a ROM, containing for each of the plurality of templates a value indicative of its alarm status, namely "alarm/no-alarm". An output of the decision store is taken to an enabling input of the alarm-gating means, while an input of the alarm-gating means is fed from the output of the pattern-recognition means.

The processing means may comprise a statistical-processing means which may be arranged to carry out a Discriminant Analysis process on incoming data.

The processing means may comprise a virtual neural network for establishing pattern recognition.

In accordance with a second aspect of the invention, there is provided a method for detecting the movement of a target using a Doppler microwave sensor, the method comprising the steps of: obtaining an IF signal containing information on the nature of the target being sensed; converting the IF signal from the time domain to the frequency domain to provide a plurality of conversion coefficients; storing said conversion coefficients in a buffer; subjecting said coefficients to a pattern-discrimination process, whereby one of a plurality of alarm conditions is identified, and triggering an alarm in dependence on which one of the plurality of alarm conditions is identified.

The method may comprise the step of comparing the conversion coefficients with a set of template coefficients for each of a number of templates in turn until a match is obtained.

Embodiments of the invention will now be described, by way of example only, with reference to the drawings, of which:

Figure 1 is a schematic diagram of a typical Doppler microwave sensor, and

Figure 2 is a schematic block diagram of a first embodiment of a Doppler microwave sensor according to the present invention.

Referring now to Figure 2, which shows a first embodiment of the Doppler microwave sensor according to the invention, the antenna signal is taken to an oscillator and mixer stage, such as the stage 10 shown in Figure 1, the output of which is an IF signal which contains information about the size, velocity and nature of the target being detected. Conventionally, the information concerning the nature of the target is discarded (this is the case with the prior system shown in Figure 1). In the present invention, however, this information forms the basis of the improved detection performance and is obtained by subjecting the incoming signal to a fast Fourier transform (FFT) in a time-to-frequency conversion means 30. The output of the conversion means 30 is fed to a buffer memory 40 containing a matrix 41 of sampling coefficients obtained from the transform process. These coefficients 41 are then fed out into one input of a pattern recognition means 50. A second input of the pattern recognition means 50 is fed at the same time with a corresponding number of coefficients of each of a number of templates. These coefficients are held in a template store 60, which is divided into areas 60-1...60-n corresponding to the various templates employed.

These templates represent the various potential alarm conditions which may be expected in actual use of the Doppler sensor, some of which conditions will be required to trigger an alarm, some of which will not. Figure 2 shows seven such templates representing seven possible alarm conditions, which may include, for example, someone rocking the vehicle, someone banging on the roof, someone entering the vehicle, the presence of a small animal in the cabin of the vehicle, and so on.

The coefficients from the buffer 40 are fed out into one input of the pattern recognition means 50 while at the same time, and at the same rate, the coefficients stored in the first area 60-1 are fed out into the other input of the pattern recognition means 50. The two sets of coefficients are compared in the pattern recognition means 50 and an output signal 51 then delivered indicating whether or not a match has been established.

At the same time as the contents of the first template area 60-1 are fed into the pattern recognition means 50, the contents of a corresponding area 70-1 in another store, the decision store 70, are fed into one input of an alarm gating means 80. A second input of the alarm gating means 80 is supplied with the output of the pattern recognition means 50.

The decision store 70 contains as many storage areas as there are templates, in this case seven, and these storage areas contain not FFT coefficients but a decision flag indicative of whether or not the template in question is to be regarded as a genuine alarm condition.

Thus, assuming area 70-1 contains a "no-alarm" indication, whether or not the output of the pattern recognition means 50 indicates a match for template 1, the alarm triggering function is disabled and no alarm is sounded. If area 70-1 contained an "alarm" indication, an alarm would only sound if a match had been established for the first template.

Once a comparison for the first template has been made, and assuming no match has been established, the contents of the second template area 60-2, representing a second potential alarm condition, are fed into the second input of the pattern recognition means 50, where again a comparison is made and an output signal provided indicating whether or not this particular template is matched by the incoming buffer coefficients. At the same time the contents of the second decision store area 70-2 are fed into the alarm gating means, according to which the alarm triggering function is either enabled or disabled. Provided this function is enabled, an alarm for the second template will only sound if a match is established for the second template. This process continues for all the templates in the template store in turn until a match is made with one of the templates. Thereafter, the template-matching process may be repeated starting from the first template.

The template matching process is carried out on the basis of a pre-established confidence level for each template, so that a match will only be indicated for a particular template if a certain percentage confidence level has been exceeded for that template.

In a second embodiment of the invention (not shown), the processes of pattern recognition and deciding whether or not to trigger an alarm are accomplished not by the matching of templates, but by the use of the known technique of Discriminant Analysis.

Discriminant Analysis is used in order to identify the variables that are important for distinguishing among mutually exclusive groups and to develop a procedure for predicting group membership for new cases whose classification is undetermined. Linear combination of the independent variables are formed and serve as a basis for classifying cases intoone of the groups. Thus information contained in multiple independent variables can be summarised in a single index. In Discriminant Analysis, the emphasis is on analysing the variables together rather than individually, and by considering the variables simultaneously important information can be incorporated about their relationship.

The linear discriminant equation is as follows:

$$D = \lambda_0 + \lambda_1 x_1 + \lambda_2 x_2 + ... + \lambda_n x_n$$

where

D is the discriminant score
x's are the values of the n independent variables
$\lambda$'s are the coefficients estimated from the data.

The Discriminant Analysis attempts to create discriminant scores that are sufficiently different for each class. In a two-class situation such as the present Doppler alarm situation, where the information required is a simple "yes"/"no" answer to the question whether the alarm should sound, the discriminant score is set up such that:

$$D>0 \Rightarrow x \in S_1$$

and

$$D<0 \Rightarrow x \in S_2$$

where $S_1$ and $S_2$ are the two classes representing the "alarm/non-alarm" conditions.

During the analysis, those variables that do not contribute significantly to the discrimination are discarded, and thus the number of multiplications and additions required on calculation of the final discriminate score is reduced.

Once this analysis has been completed and a set of discriminating coefficients arrived at, they can be used when deciding the condition of a new input data set. The value of the discriminant score will determine which class it came from, i.e. whether or not it warrants the sounding of an alarm.

In tests done using this technique, a program (SPSS) was employed to form the linear discriminant equation from a set of training data, the coefficients of which could be used to discriminate random input data at a later time. The first ten sets of data were taken from each potential alarm condition to form the training data. These sets of data (noise measurements were not used) were taken through a triggered Blackman window, giving 512 points. This was then FFT'd to give a 256-point frequency response which was further reduced to allow the SPSS program to handle the data to 128 points using a two-point average. These were input into SPSS to form the discriminant equation. SPSS gave a result of 98.5% correct classification for the training data, and using this on the test data (formed by other files) a correct classification of 76.8% was achieved.

The Discriminant-Analysis technique is easy to implement once a comprehensive and accurate set of training data has been acquired, and lends itself to low-cost implementation, chiefly due to the fact that no heavy processing is required once the equation is formed; the input data merely has to be plugged into the linear equation, with the result deciding the condition.

In a third embodiment of the invention (not shown), pattern recognition is achieved by the use of a neural network technique, whereby a number of elementary processing units (neurons) are connected together into a "neural network". Normally, neurons are arranged in layers, with the input data fed to the network at the input layer, the data then passing through the network to the output layer to provide the solution or answer. In this technique, the neural network "adapts" itself during a training period, based on examples of similar problems, usually with a desired solution to each problem. After sufficient training the neural network is able to relate the problem data to the solutions, inputs to outputs, and it is then able to offer a viable solution to a brand new problem, i.e. in this case the answer to whether or not a particular potential alarm condition merits the sounding of an alarm.

The network may be a "virtual" network running on a microcomputer. It may be an embedded software network. The size of the array used depends on the processor speed and the degree of discrimination accuracy required. The network can be formed using standard microprocessors. The hardware implementations can be done on a single chip. Note that An FFT is still required to feed the network.

An advantage of neural computing is that it allows "fuzzy" decisions, i.e. pattern matching within a given error margin. This reduces the complexity of the solution.

The sensor using this technique can be "trained" for each specific application, which means in automotive terms, for each type of vehicle. Different types of vehicle (e.g. large/small) can be accommodated using this system, the sensor being then programmed according to vehicle type during manufacture. It is a further advantage of this technique that training needs to be done only once per vehicle type.

## Claims

1. A Doppler microwave sensor for detecting the movement of a target, comprising an oscillator and mixer stage having an input coupled to an antenna and an output for delivering a signal which contains information concerning the target, and a processing stage fed from said output of the oscillator and mixer stage, the processing stage being arranged to decide whether or not the nature of the target being sensed is such as to warrant the triggering of an alarm indication.

2. A Doppler microwave sensor in accordance with Claim 1 wherein the processing stage comprises a discrimination means for discriminating between the natures of a number of different targets and an alarm triggering means connected with the discrimination means for triggering an alarm in dependence upon the result of the discrimination carried out by the discrimination means.

3. A Doppler microwave sensor in accordance with Claim 2 wherein the discrimination means includes a time-to-frequency conversion means for conversion of time-domain information to frequency-domain information.

4. A Doppler microwave sensor in accordance with Claim 3 wherein a set of frequency-domain coefficients derived from the conversion are applied to a buffer circuit for temporary storage.

5. A Doppler microwave sensor for detecting movement of a target, comprising an oscillator/mixer stage coupled to an antenna and having an output for delivering output signals from said oscillator/mixer stage which may contain information concerning the target, and processing means including conversion means for converting time-domain information in said output signals to frequency-domain information and discrimination means for discriminating the nature of the frequency-domain information to decide whether or not a target being sensed is such as to warrant the triggering of an alarm indication.

6. A Doppler microwave sensor in accordance with Claim 3 or Claim 5 wherein the discrimination means comprises template-matching means for comparing the frequency-domain information in respect of a target with any one of a plurality of templates representing potential alarm conditions.

7. A Doppler microwave sensor in accordance with Claim 6 wherein the template-matching means comprises a template store containing a set of frequency-domain coefficients in respect of each of the plurality of templates, and pattern-recongnition means for comparing said frequency-domain information with said sets of frequency-domain coefficients contained in said store.

8. A Doppler microwave sensor in accordance with Claim 1 wherein the processing stage comprises a discriminant analysis processor.

9. A Doppler microwave sensor in accordance with Claim 1 wherein the processing stage comprises a neural network pattern recognition means.

10. A method for detecting movement of a target using a Doppler microwave sensor, comprising the steps of: obtaining an IF signal containing information on the nature of a target being sensed; converting the IF signal from the time domain to the frequency domain to provide a plurality of coefficients; storing said coefficients; subjecting said coefficients to a pattern-discrimination process whereby any one of a plurality of alarm conditions may be identified; and triggering an alarm in dependence upon which one of the alarm conditions is identified.

11. A method in accordance with Claim 10 wherein the pattern-discrimination process comprises comparing said coefficients with a respective set of coefficients for each of a plurality of templates in turn until a match is obtained.

**Figure 1**

**Figure 2**